(19) **Europäisches Patentamt / European Patent Office / Office européen des brevets**

(11) **EP 3 928 175 B1**

(12) **EUROPEAN PATENT SPECIFICATION**

(45) Date of publication and mention
of the grant of the patent:
**13.08.2025 Bulletin 2025/33**

(21) Application number: **19716042.7**

(22) Date of filing: **22.03.2019**

(51) International Patent Classification (IPC):
**G06F 30/20** (2020.01)  **G06F 30/27** (2020.01)
**G06N 3/045** (2023.01)  **G06N 3/047** (2023.01)
**G06N 3/08** (2023.01)  G06F 111/04 (2020.01)

(52) Cooperative Patent Classification (CPC):
**G06F 30/27; G06F 30/20; G06N 3/045;**
**G06N 3/047; G06N 3/08;** G06F 2111/04

(86) International application number:
**PCT/US2019/023527**

(87) International publication number:
**WO 2020/197529 (01.10.2020 Gazette 2020/40)**

(54) **INVERSE AND FORWARD MODELING MACHINE LEARNING-BASED GENERATIVE DESIGN**

UMGEKEHRTE UND VORWÄRTS GERICHTETE MODELLIERUNG EINES GENERATIVEN DESIGNS AUF DER BASIS VON MASCHINENLERNEN

CONCEPTION GÉNÉRATIVE BASÉE SUR L'APPRENTISSAGE AUTOMATIQUE D'UNE MODÉLISATION INVERSE ET DIRECTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.12.2021 Bulletin 2021/52**

(73) Proprietor: **Siemens Aktiengesellschaft**
**80333 München (DE)**

(72) Inventors:
- **VENUGOPALAN, Janani**
  **Plainsboro, New Jersey 08536 (US)**
- **SRIVASTAVA, Sanjeev**
  **Princeton Junction, New Jersey 08550 (US)**
- **CHALUPKA, Krzysztof**
  **Bellevue, Washington 98004 (US)**
- **STANISZEWSKI, Marcin**
  **Pincourt, Québec J7W 0M1 (CA)**
- **VILLENEUVE, Frederic**
  **Oviedo, Florida 32765 (US)**
- **SLAVIN III, Edward**
  **Robbinsville, New Jersey 08691 (US)**

(74) Representative: **HKW Intellectual Property PartG mbB**
**Theresienhöhe 12**
**80339 München (DE)**

(56) References cited:
- **CEM C TUTUM ET AL: "Functional Generative Design: An Evolutionary Approach to 3D-Printing", ARXIV.ORG, CORNELL UNIVERSITY LIBRARY, 201 OLIN LIBRARY CORNELL UNIVERSITY ITHACA, NY 14853, 19 April 2018 (2018-04-19), XP080872549, DOI: 10.1145/ 3205455.3205635**
- **RICHARD J PREEN ET AL: "Design mining interacting wind turbines", EVOLUTIONARY COMPUTATION, MIT PRESS, CAMBRIDGE, MA, US, vol. 24, no. 1, 1 March 2016 (2016-03-01), pages 89 - 111, XP058261590, ISSN: 1063-6560, DOI: 10.1162/EVCO_A_00144**
- **YAOCHU JIN ET AL: "A systems approach to evolutionary multiobjective structural optimization and beyond", IEEE COMPUTATIONAL INTELLIGENCE MAGAZINE, IEEE, US, vol. 4, no. 3, 1 August 2009 (2009-08-01), pages 62 - 76, XP011271468, ISSN: 1556-603X, DOI: 10.1109/MCI.2009.933094**

**Description**

BACKGROUND

The present embodiments relate to designing objects, such as an efficient, low emissions gas turbine. Such designs account for properties such as temperature, turbine shaft power, exhaust pressure of the turbine, and other characteristics. In the turbine use-case, given the restrictions for a given design, the efficiency is to be maximized while constraining exhaust temperatures to being below a maximum value and keeping ambient temperature, turbine shaft power fixed.

Design engineers work with these parameters, constraints, and evaluation criteria (e.g. the shaft power must be within 0.05% of the design criteria and the overall errors must be within 5% of the design parameters) to design efficient gas turbines and engines. Design engineers spend a lot of time generating new design iterations using a number of time-consuming simulation-based tools. For complex turbine systems, validating using simulation software may take hours, slowing down the design-evaluate-redesign loop. As a result, the design engineers may not explore the complete design space due to the time-consuming design creation and analyses process. An optimal design with better efficiencies may not be created.

The article Cem C. Tutum et al.: "Functional Generative Design: An Evolutionary Approach to 3D-Printing", April 19, 2018, DOI: 10.1145/3205455.3205635, discloses a methodology for finding new designs for known objects that have certain desired properties and/or are improved over the known designs. The proposed methodology consists of three components: First, an effective search space is learned through a variational autoencoder (VAE); second, a surrogate model for functional designs is built; and third, a genetic algorithm is used to simultaneously update the hyperparameters of the surrogate and to optimize the designs using the updated surrogate.

SUMMARY

By way of introduction, the preferred embodiments described below include methods, systems, instructions, and computer readable media for generative design by machine-learned networks. Rather than emulate the typical human design process, an inverse model machine learning model is trained to generate a design from requirements. A surrogate model (simulation or machine learning) is trained to estimate the engine performance given the design. These two trained machine-learning models are used to optimize designs. Further designs are created from the inverse model to output designs and the surrogate models are used to tests those designs. The use of machine-learning models in this loop for exploring many different designs decreases the time to explore, so may result in a more optimal design or better starting designs for the design engineer.

The present invention is defined by the following claims, and nothing in this section should be taken as a limitation on those claims. Further aspects and advantages of the invention are discussed below in conjunction with the preferred embodiments and may be later claimed independently or in combination.

BRIEF DESCRIPTION OF THE DRAWINGS

The components and the figures are not necessarily to scale, emphasis instead being placed upon illustrating the principles of the invention. Moreover, in the figures, like reference numerals designate corresponding parts throughout the different views.

Figure 1 is a flow chart diagram of one embodiment of a method for machine training a design system for design generation;
Figure 2 is a flow chart diagram of one embodiment of a method for generative design by an artificial intelligence processor;
Figure 3 illustrates an example of machine-learned design generation from requirements and constraints;
Figure 4 illustrates an example of machine-learned simulation of performance from design; and
Figure 5 is a block diagram of one embodiment of a system for machine-learning-based design.

DETAILED DESCRIPTION OF THE DRAWINGS AND PRESENTLY PREFERRED EMBODIMENTS

Machine learning-driven optimization is used for generative design. Machine learning-based generative design generates a new design of an object, such as a turbine design. The machine learning-based generative design adheres to the user-defined performance or design parameters and criteria. In addition, a machine learning-based optimization technique improves the design to meet the user defined functional requirements and achieve certain objectives.

The use of machine learning-based design generation and optimization results in the processor performing the design operations more rapidly. The processor operates better and more efficiently with machine learning -based surrogate models as compared to manual design with programmed simulation. The machine learning-based design generation and optimization is automatic after initial training using historical data, requiring the user to only specify the desired properties of the design and evaluation criteria that accept or reject an auto-designed design. The autonomous design advisor based on machine learning speeds up the design life cycle since the design system is able to autonomously suggest designs to meet the new requirements, providing both quick creation and evaluation of new designs. The use of machine learning better explores the design options for design generation, allowing the opportunity to explore more design options within a given cycle time or reduction in the design cycle time through faster decision making.

The object to be designed is of any type. In the examples below, a turbine, such as a low emissions gas turbine, is designed. Other objects that may be generatively designed include a suspension, printed circuit board, blade (e.g., wind turbine blade), axle, circuit, transmission, transformer, impeller, topology for any type of part, structure for any type of part (e.g., wheel or hull design), router or vane, or other objects.

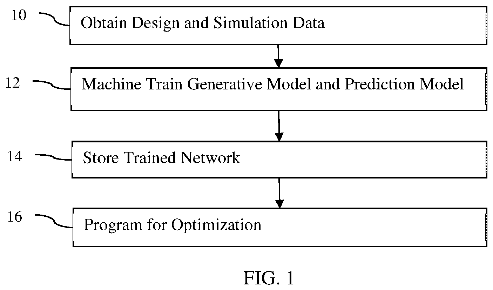

Figure 1 shows one embodiment of a method for machine training a design system. The training uses deep learning to train both a generator of designs and a simulator or surrogate model to simulate performance of the generated designs. The simulator may be used for optimization of the designs to more thoroughly explore the possible designs.

The method is implemented by a machine, database, and/or programmer. A programmer may manually program or create software to optimize. A machine uses deep learning to create the generative model and the predictive simulator model, so a machine-based rather than human based approach to design generation and performance simulation is provided. The training data (e.g., designs and performance measures) for deep learning are stored in the database. The machine, such as a processor, workstation, server, controller, or other processor, trains defined neural network architectures based on the training data in the database.

The acts are performed in the order shown (i.e., top to bottom or numerical order) or other orders. Additional, different, or fewer acts may be provided. For example, act 16 is not provided. As another example, act 12 is performed using an already created database of training data. In another example, act 12 is divided into two acts, one for training the design generative model and another for training the simulation model. In yet another example, acts for defining the neural network architecture, activating the training, selecting training data, testing the machine-learned network, and/or controlling the learning are provided.

In act 10, training data is obtained. For machine training, hundreds, thousands, tens of thousands, or other number of samples with ground truth are used. The generative model takes as input expected performance information, such as requirements and constraints for operation, and outputs design information, such as settings. This is an inverse approach. The simulation model is a forward predictor, so receives design information and outputs performance information. The same training data may be used to train both models where the ground truth for one model are the input samples for the other and vice versa. In alternative embodiments, different training data is acquired for training the different models.

The training data is gathered from sensors, measurements, and/or other recordings. For implemented designs, the measures of performance are obtained from field measures or testing. The design information for the implemented designs is obtained from a database or record of the design. For other samples in the training data, physics simulation is used for proposed or previously simulated. The design information as proposed and the simulated performance provide samples. Design tools may be used.

The performance information may include user requirements and/or constraints. A specification of the required operation of the design and any acceptable ranges (e.g., minimum and/or maximum) as constraints defines the parameters for the performance information. The performance information are characteristics for operation of the design, the size and weight of the design etc. The requirements may be performance parameters with values to be fixed by the design. The constraints may be performance parameters with values to be constrained to maximum and/or minimum values. The performance information may include one or more performance parameters for a goal. One or more requirements and/or constraints may be identified as a goal. For example, the efficiency (e.g., turbine efficiency) is to be optimized. The goal is a performance parameter for which the design is to operate in a best way possible or a better way than other designs.

In the gas turbine example, the user inputs values for performance parameters such as the ambient temperature, turbine shaft power, turbine exhaust temperature, and combustor cooling fraction of intake flow. The goal is to maximize the performance parameter of turbine efficiency, subject to the above-mentioned constraints and/or requirements. Values for other performance parameters as requirements or constraints may be used, such as fuel lower heating value, external cooler power, gas turbine exhaust (total) pressure, combustor cooling fraction of intake flow, combustor cooling efficiency, combustor cooling power, absence or presence of external cooling, ambient air cooling fraction of intake flow, delta verses arbitrary, compressor exit temperature, fuel flow, $CO_2$ exhaust gas composition, $H_2O$ exhaust gas composition, $N_2$ exhaust gas composition, Ar exhaust gas composition, $O_2$ exhaust gas composition, $SO_2$ exhaust gas composition, compressor intake flow, turbine inlet temperature, compressor exit pressure, and/or enthalpy at compressor exit. Different performance parameters may be used as parameters for requirements, constraints, and/or goals. Some may not be used depending on the design needs. Other performance parameters may be used for gas turbines or other objects. Any number of performance parameters and corresponding requirements or constraints may be used.

The design information includes settings for controlled characteristics. Particular choices in design may lead to particular design characteristics. The design parameters are variables that control operation by the object, resulting in the performance parameters.

The design parameters may be the same or different than performance parameters. Where the performance is not required or constrained, the parameters may be part of the design.

In one embodiment of the gas turbine example, the design parameters include gas turbine shaft efficiency, polytropic compressor efficiency, isentropic ISO turbine efficiency, ISO turbine inlet temperature, compressor pressure ratio, SAS equivalent mass flow, primary zone temperature, gas turbine exhaust flow, turbine cooling fraction of intake flow, compressor intake flow, turbine inlet temperature, compressor exit pressure, enthalpy at compressor exit, combustor cooling power, cooled cooling air flow, compressor exit temperature, fuel flow, $CO_2$ exhaust gas composition, $H_2O$ exhaust gas composition, $N_2$ exhaust gas composition, Ar exhaust gas composition, and $O_2$ exhaust gas composition. In another embodiment, the design parameters include ambient temperature, polytropic compressor efficiency, isentropic iso turbine efficiency, iso turbine inlet temperature, compressor pressure ratio, SAS equivalent mass flow, primary zone temperature, gas turbine exhaust flow, fuel lower heating value, combustor cooling fraction of intake flow, turbine cooling fraction of intake flow, cooled cooling air flow, absence or presence of external cooling, absence or presence of SiCAT, ambient air cooling fraction of intake flow, and delta verses arbitrary. Additional, different, or fewer parameters may be used for the design.

In act 12, a machine trains a first neural network as a generative model to inverse model from first values of requirements and/or constraints for a design to generate the design. The machine trains the network to receive values for performance parameters and output values for design parameters in an inverse model. The same or different machine trains a second neural network as a predictive model to predict values for the requirements from the design (e.g., the second neural network as a surrogate model to simulate performance of the design). The machine trains the network to receive values for design parameters and output values for performance parameters. The machine trains the network to simulate operation of the object as designed.

Deep learning is used to train the artificial neural networks. Any deep learning approach or architecture may be used. The deep learning trains filter kernels, connections, weights, and/or other features that, in combination, indicate the values for outputs given the inputs. Features useable to determine the output may be learned using deep learning. The deep leaning provides a deep machine-learned network that outputs results given previously unseen inputs. The training data is used by the machine to learn to output values given unseen input values.

The architectures of the networks may include convolutional, subsampling (e.g., max or average pooling), fully connected layers, recurrent, SoftMax, concatenation, dropout, residual, and/or other types of layers. Any combination of layers may be provided. Any arrangement of layers may be used. Skipping, feedback, or other connections within or between layers may be used. Hierarchical structures may be employed, either for learning features or representation or for classification or regression.

The architectures for deep learning may include a convolutional neural network (CNN) or convolution layer. The CNN defines one or more layers where each layer has a filter kernel for convolution with the input to the layer. Other convolutional layers may provide further abstraction, such as receiving the output from a previous layer and convolving the output with another filter kernel. The machine learning identifies filter kernels that extract features indictive of the solar irradiation.

The architecture may include one or more dense layers. The dense layers connect various features from a previous layer to an output from the layer. In one embodiment, the dense layers are fully connected layers. One or more fully connected layers are provided. The dense layers may form a multi-layer perceptron.

In one embodiment, the architecture for the generative model is a generative adversarial network (GAN) or a mixture density network (mixture of Gaussians or kernel density estimator). The GAN includes an encoder and decoder connected with a bottleneck to generate output information from the input through increasing and then decreasing levels of abstraction. A discriminator is provided in training to predict the accuracy of the output of the encoder-decoder. This prediction is fed back to the encoder-decoder in training. Both the discriminator and the encoder-decoder learn during training. The architecture for the forward or predictive model for simulation is a fully-connected residual network. Other types of architectures or corresponding networks may be used, such as other generative models or feedforward neural networks for the generative model or other residual networks for the predictive or simulation model. Other types of machine learning and corresponding networks may be used instead of neural networks and deep learning, such as a support vector machine.

The networks are trained for any number of epochs (e.g., 300) using any optimization, such as Adam, a learning rate of 0.0001, and/or mean-squared error loss (e.g., L1). Other arrangements, layers, units, activation functions, architectures, learning rates, optimizations, loss functions, and/or normalization may be used. Other architectures may be used.

The training identifies kernels, weights, connections, and/or other information of the architecture relating the input to the ground truth output. The deep learning trained neural networks are stored in act 14. Once trained, the machine-learned artificial neural networks may be applied. The networks are stored so that the networks may be used in application for a particular design.

As trained, the generative or inverse network may output one or more designs given user requirements, constraints, and/or goals. The simulation or predictive network may output one or more values of performance characteristics for each design. To explore the design space, further designs are attempted. In act 16, a program is created for altering proposed designs. The designs as altered are then simulated using the machine-learned simulation or predictive network. Many designs may be quickly tested using the machine-learned network, so the programming optimizes the design based on the output of the machine-learned network. The goal and satisfaction or difference from requirements and/or constraints are used to optimize the design, resulting in one or more designs for an object.

The programming is manual. A programmer programs the machine to use the machine-learned networks to provide one or more optimized designs.

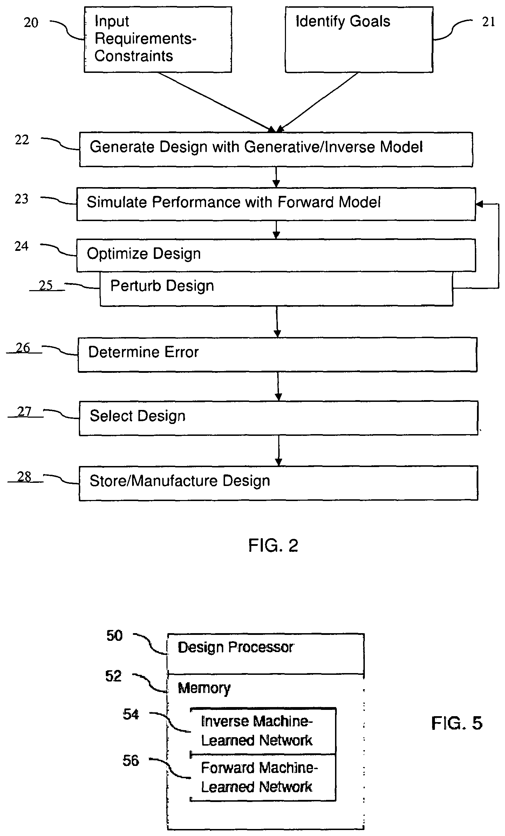

Figure 2 shows one embodiment of a flow chart of a method for generative design by an artificial intelligence processor. The machine-learned generative and predictive networks are used to design an object. Machine-learned networks are used in an optimization for design.

The artificial intelligence processor is a processor for applying the machine-learned networks. The artificial intelligence processor may include massive parallel processing or may be a general processor, image processor, graphics processing unit, application specific integrated circuit, field programmable gate array, or other processor capable of using machine-learned networks. In one embodiment, the design system of Figure 5 is used. The processor performs acts 22-26. A user or the processor performs acts 20 and 21. A manufacturing system or assembly may perform act 27. Alternatively, a memory performs act 27.

The acts are performed in the order shown (i.e., top to bottom or numerical) or other order. For example, acts 20 and 21 are performed simultaneously or in any order. As another example, act 27 may be performed for all the designs after act 23 and/or act 25 and/or may be performed for designs output after act 22 before act 23.

Additional, different, or fewer acts may be provided. For example, act 28 is not performed. As another example, acts 26 and/or act 27 are not provided. In yet another example, acts for further design modification and/or simulation are provided, such as where the optimization is used to provide initial designs to be refined by design engineers.

In act 20, the requirements and constrains for a current project are input. The user provides the specifications for the project. The processor inputs the values for the performance parameters into the generative model.

In act 21, the goal or goals are identified. The user indicates the performance parameter to be optimized, such as indicating the gas turbine efficiency. The processor flags or identifies the goal to be used in the optimization of act 24. The goal may be a requirement or constraint as well, so is shown as input to act 22. In alternative embodiments, the goal is input to the optimization of act 24.

In act 22, the processor generates one or more designs of an object to be designed. The designs are values of design parameters indicating the structure, control, and/or manufacture of the object.

The generative model provided by the machine-learned network generates one or more designs. A single one or multiple different possible designs are generated in response to one input or request by the generative model. The generative model is an inverse model that generates design from design requirements rather than generating values for performance parameters from an input design. Given performance features, the inverse model designs multiple sets of design values that generate these performance outputs.

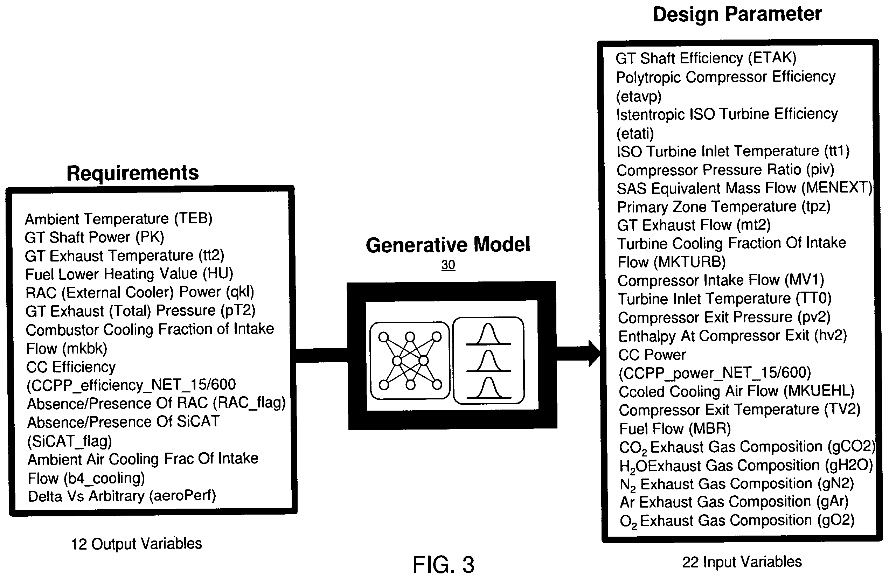

Figure 3 shows an example. Values for operation or performance parameters listed as requirements are input to the machine-learned generative network 30. The machine-learned network 30 outputs values for design parameters. The requirements are indicated as output variables to be input to the inverse model, and the design parameters are indicated as input variables, reflecting the inverse modeling.

The function of the generative model is to take a set of user requirements or targets and generate a set of designs that meet the targets (i.e., design solutions that work given the requirements and constraints). These design solutions (Design 1, Design 2, ... Design n) are generative designs of the gas turbine engine that may meet the targets.

Any number of designs may be output, such as a fixed number or all possible designs meeting the requirements and constraints. For example, three designs or at least three designs (e.g., 1,500) are output in response to the input. The user requirements and constraints, including the goal parameter to be maximized or minimized, are input to the generative model, which outputs a plurality of designs.

The input goal is used to select some or less than all the output designs. The goal is a requirement, constraint, or other performance parameter to be maximized or minimized. The selection is performed on the output of the machine-learned inverse network, but the network may have been trained to perform the selection. A sub-set of the output designs may be selected based on the goal, such as selecting n output designs as the n designs with a greatest efficiency. In one example, 100 designs for each of values of factors to maximize or minimize (e.g. greatest efficiency) are chosen as initial seeds. The selection may sample through a range of values of the goal (e.g., a range of efficiency), such as selecting designs with efficiency values of 100, 95, 90, 85, 80, 75, 70, 68, 65, 63, 60, 58, 55, 53 and 50. Alternatively, all the output designs are used (e.g., select all).

The selected designs adhere to the requirements and constraints. Rather than strict adherence, designs meeting some, most, or close to meeting may be output and selected. The results from generative model are designs that may potentially meet the targets (e.g., constraints and/or requirements) but are not necessarily the optimal design.

The designs output by the generative model are used subsequently by an optimization module to find more optimal designs. The selected designs are used as initial seeds. The optimization produces additional designs from these initial seeds output by the inverse model given the user inputs and seed efficiency values.

In act 23, the processor simulates operation of each of the selected designs. Operation of one or more designs is simulated. The simulation provides values for one or more performance or operational parameters. The simulation may estimate values for the parameters of the requirements and/or constraints. The simulation may estimate a value or values for the goals. The simulation may estimate values for other operation or performance parameters.

The simulation is provided by the forward or prediction model. The machine-learned network trained to simulate outputs the values of the performance parameters. The machine-learned model outputs values for performance parameters (e.g., design requirements, constraint, and/or goal) for each of the input designs. Given input features (i.e., input values of design parameters), the forward model predicts output features (e.g. acts as a simulation surrogate model). The predictive model estimates operation of the proposed design.

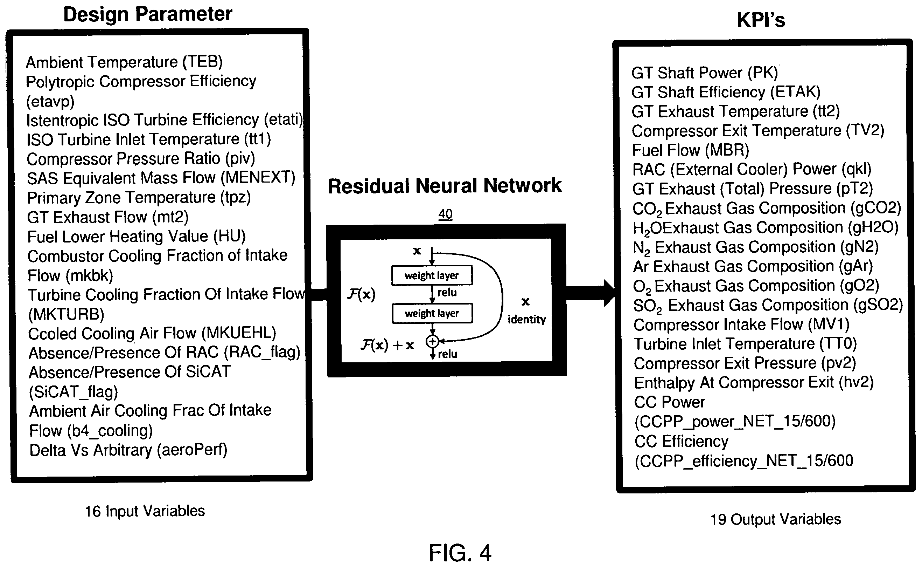

Figure 4 shows an example. Values for design parameters are input to the machine-learned residual neural network 40. The machine-learned network 40 outputs values for performance or operation parameters. The performance parameters are the same or different than the requirements, constraints, and/or goals. The performance parameters are indicated as output variables, and the design parameters are indicated as input variables, reflecting the forward modeling.

The simulations validate the designs. Each design (e.g., each initial seed) is input sequentially. The simulation machine-learned model outputs the values for the performance parameters for each of the input designs. The output of the generative model is a set of design parameters to be validated. The simulation model indicates whether the designs fulfill the user requirements, constraints, and/or goal satisfactorily. Instead of performing a costly and time-consuming simulation, the machine-learned predictive model approximates simulation results in a fraction of a second.

Another selection may be made. The values of the performance parameters may be used to select. The initial seeds are evaluated against a criterion (e.g., the goal such as efficiency) using the forward model. Evaluation against the requirements and/or constraints may also be used for selection. Promising seeds (i.e., designs) meeting or close to the criterion are selected.

The simulation outputs performance results or simulated operation for the initial seeds of designs from the generative model. The initial design seed that best satisfies the goal or goals is an optimized design.

In act 24, further designs may be created to optimize the design further. The generative model and the simulation model are used to optimize through maximization or minimization of the value of the goal parameter, such as turbine efficiency. The optimization generates m designs that approach the optimal design. The m designs are created from the n initial design seeds output from act 22 or a sub-set of the n initial design seeds (e.g., seeds with greatest efficiency). The optimization chooses input values of design parameters such that the output value of the goal is maximized or minimized. The designs may be selected for optimization based on satisfaction of requirements and/or constraints.

In act 25, additional designs are generated from the initial design seeds. The designs are perturbed. The designs output from the generative model or a selected sub-set of the designs output are perturbed. Previously perturbed designs may be perturbed.

The designs are perturbed by changing the value or values of one or more design parameters. The design parameters from the inverse model or a previous perturbation are perturbed. The amount of change and/or direction of change may be determined based on a pattern. The change may be by an offset amount based on the parameter and/or by a percentage change.

In one embodiment, the optimization perturbs based on previous changes or perturbation. A gradient based on the goal is used. The amount of change in the value of the goal from a previous change is used to select an amount of change and/or what parameter to change. For example, one or more initial designs with greater efficiency are altered. The amount and/or direction of change is based on comparison of the values of the goals and the differences in the values of design parameters. The designs are perturbed to maximize the target maximizing criterion. A search pattern may be used, such as perturbing each or a sub-set of values of the design parameters for each design in sequence.

In one example, for each initial seed, the gradient of efficiency is evaluated with respect to the input values (I). The forward model (f) trained for the efficiency goal is used in the evaluation. The gradient is given by:

$$\frac{\delta f}{\delta I} = gradient.$$

The gradient is a ratio of change in performance of efficiency to change in the design values. The values of gradient greater than 0 indicate which inputs will result in efficiency increase, so those values are selected for change. The amount of perturbation may be limited, such as by a maximum of 1 % perturbations scaled according the absolute value of the gradient for gradients greater than 0. Other limits or amount of change may be used.

As represented by the arrow from act 25 to act 23, the optimization tests each perturbation with the simulation. The designs as perturbed are input to the machine-learned simulation model, which outputs values of the performance variables including the goal (e.g., efficiency) for each perturbed design. The perturbed designs are evaluated against the goal or criterion using the forward model.

The optimization (e.g., perturbation and simulation) may repeat until the gradients are below a threshold or until a threshold number of repetitions occur. The repetition occurs until the gradients with respect to each input are smaller than a threshold and/or a number (e.g., 100) of iterations does not exceed the threshold. A limited number of iterations without other criteria for termination may be used (e.g., perform 500 times and then stop).

Using machine-learned generation and simulation increases the speed of exploring the design options as compared to genetic algorithms. The optimization evaluates designs and moves the designs towards the optimal design.

During optimization, the designs are fed into the forward model, and results are tested against the targets provided by the user in act 26. The processor determines an error of each of the one or more designs as perturbed and/or the initial seed designs. The error is between the simulated values of performance and the user or specified values of performance. The values for restricted and constrained performance parameters are compared to the values of the same parameters from the simulation.

Any comparison may be made, such as measuring an average percentage difference. Weighted combination with weights based on parameter importance and/or other measures of similarity may be used. In one embodiment, a relative error is determined. The output designs of the optimization through perturbation are run through the simulation model for evaluation. The simulated values of the performance parameters are evaluated against targets input by the user or a specification. The relative error is calculated and gives an estimate of the deviation of the generated designs from the targets. If the errors are unacceptable (e.g., above a threshold), the user may trigger more designs until the designs are acceptable.

In act 27, the processor selects one or more designs based on the errors for the various designs. The selection may be of a design of the initial seed and/or of a design as perturbed. A subset of tested or simulated designs or a single design may be selected.

The selection is based on the simulation. The error as determined in act 26 uses the values for the performance parameters from the forward model. The error is used for the selection, such as selecting the designs with the least relative error. A weighted error may be used, such as weighting some performance parameters (e.g., requirements or constraints) more greatly than others.

In one embodiment, the error and the value of the performance parameter for the goal are used together for the selection. A set number of designs with the highest or lowest value for the goal (e.g., highest efficiency) and/or error is used. Alternatively, the designs with a value for the goal above or below a threshold are used. For these goal-based selections, the design or designs with a lowest relative error are selected. A set number or error below a threshold are output as the selected designs. In other embodiments, the error is used to determine a sub-set (e.g., select designs below a threshold error), and the selection completes by selecting the low error designs with a greatest or least value for the goal. In one embodiment, the highest efficiency design or designs with zero error from the requirements and constraints are selected.

In one embodiment, a few candidate designs (e.g., three or any number with a value of the goal above or below a threshold) are chosen after perturbation in the direction of optimal design. In other embodiments, the best design is the output based on a weighted combination of error and value of the goal parameter. In yet other embodiments, the error alone is used where the goal parameter is included in the parameters used for the error.

In act 28, the selected design or designs are stored in a memory. The design or designs are stored for evaluation by one or more engineers, such as running physics-based simulation on the design or designs. The designs may be stored for production. One or more objects (e.g., gas turbine engines) are manufactured based on the selected design. The manufactured object may be tested for comparison to the simulated performance.

The selected design or designs may be used as initial designs in a further design process. For example, for high fidelity operations, the design outputs of the machine-learned-based optimization are be used for seed generation based on the initial constraints as opposed to random seeds to significantly speed up optimal design generation using traditional or manually controlled optimization techniques. The selected design or designs are manually altered and/or used in a physics-based simulator to evaluate further.

Any designs approved by an expert may be used to further improve the machine learning. The generative or inverse model and/or the simulator or forward model are retrained with the approved design providing further training data. Alternatively, incremental or online machine learning is performed to update the machine-learned network or networks based on the approved designs.

Figure 5 shows one embodiment of a system for machine-learning-based design. Two deep-trained neural networks 54, 56 are applied. The system implements the method of Figure 2, but other methods may be implemented. In alternative embodiments, the system is used to train the networks 54, 56. The system may implement the method of Figure 1, but another machine learning may be used.

The system includes a design processor 50 and a memory 52. Additional, different, or fewer components may be provided. For example, a network or network connection is provided, such as for networking the design processor 50 and the memory 52. In another example, a display and/or user interface (e.g., display and user input device - mouse and keyboard) are provided for interaction with the learning and/or design.

The design processor 50 and/or memory 52 are part of an engineering workstation. Alternatively, the design processor 50 and/or memory 52 are part of a separate computer or server.

The memory 52 is a graphics processing memory, a video random access memory, a random-access memory, system memory, cache memory, hard drive, optical media, magnetic media, flash drive, buffer, database, combinations thereof, or other now known or later developed non-transitory memory device for storing data. The memory 52 is part of the design processor 50, part of a computer associated with the design processor 50, part of a database, part of another system, or a standalone device.

The memory 52 stores the training data, specification, parameters, values for parameters, the inverse machine-learned network 54, and/or forward machine-learned network 56. The memory 52 may store other information. For example, the values of the input feature vector, the values of the output vector, the connections/nodes/weights/convolution kernels of the deep machine-learned networks 54, 56, calculated values in applying the networks 54, 56, selections, errors, optimization information, gradients, and/or other data from design are stored. The design processor 50 may use the memory 52 to temporarily store information during performance of the method of Figure 2.

The memory 52 or other memory is alternatively or additionally a non-transitory computer readable storage medium storing data representing instructions executable by the programmed design processor 50. The instructions for implementing the processes, methods and/or techniques discussed herein are provided on non-transitory computer-readable storage media or memories, such as a cache, buffer, RAM, removable media, hard drive, or other computer readable storage media. Non-transitory computer readable storage media include various types of volatile and nonvolatile storage media. The functions, acts or tasks illustrated in the figures or described herein are executed in response to one or more sets of instructions stored in or on computer readable storage media. The functions, acts or tasks are independent of the particular type of instructions set, storage media, processor or processing strategy and may be performed by software, hardware, integrated circuits, firmware, micro code and the like, operating alone, or in combination. Likewise, processing strategies may include multiprocessing, multitasking, parallel processing, and the like.

In one embodiment, the instructions are stored on a removable media device for reading by local or remote systems. In other embodiments, the instructions are stored in a remote location for transfer through a computer network or over telephone lines. In yet other embodiments, the instructions are stored within a given computer, CPU, GPU, or system.

The design processor 50 is an artificial intelligence processor, such as a general processor, central processing unit, control processor, graphics processor, digital signal processor, application specific integrated circuit, field programmable gate array, massively parallel processor, processor designed specifically to implement machine-learned networks, digital circuit, analog circuit, combinations thereof, or other now known or later developed device for generating and evaluating engineering designs. The design processor 50 is a single device or multiple devices operating in serial, parallel, or separately. The design processor 50 may be a main processor of a computer, such as a laptop, server, or desktop computer, or may be a processor for handling some tasks in a larger system. The design processor 50 is configured by instructions, firmware, design, hardware, and/or software to perform the acts discussed herein.

The design processor 50 is configured by instructions or software stored in the memory 52 to inverse model design parameters from a specification for a design. The inverse modeling uses a neural network having been trained by a machine. The requirements, constraints, goal parameters and/or other parameters of the specification representing desired operational characteristics of the design are used to inverse model design parameters, such as settings of variables for the design. The inverse model generates design parameters for one or more (e.g., multiple) possible designs given the values of the specification.

The design processor 50 is configured by instructions or software stored in the memory 52 to optimize the design parameters based on simulation for the designs. Using the design parameters from the inverse modeling, the design processor 50 uses a neural network having been trained as a forward model by the same machine or a different machine to simulate performance or operation of the design. By altering the design, a criterion of performance of the design may be maximized or minimized while also meeting or being within a tolerance of requirements and/or constraints of the specification. The optimization may generate additional possible designs by perturbation of the design parameters of the multiple possible designs from the inverse model.

The design processor 50 is configured by instructions or software stored in the memory 52 to select one of the possible designs as the design for the output of the design parameters. More than one possible design may be selected for output. The selected design is then output, such as to a memory and/or to a display. The output design may be altered and/or is used for manufacture of the designed object. The manufactured object more likely provides optimum performance due to the use of the two machine-learned networks in design creation.

While the invention has been described above by reference to various embodiments, it should be understood that many changes and modifications can be made without departing from the scope of the invention. It is therefore intended that the foregoing detailed description be regarded as illustrative rather than limiting, and that it be understood that it is the following claims, that are intended to define the scope of this invention.

**Claims**

1. A method for generative design of a turbine by an artificial intelligence processor (50), the method comprising:

   Generating (22), by the artificial intelligence processor (50), one or more designs of a turbine to be designed, the generating being by a first machine-learned network (54) in response to input of first values of design requirements, a constraint, and a goal to optimize the efficiency for the turbine to be designed, the first machine-learned network (54) comprising an inverse model;
   Simulating (23), by the artificial intelligence processor (50), operation of each of the one or more designs by a second machine-learned network (56), the simulating providing second values for the design requirements, the constraint, and/or the goal;
   perturbing (25) the one or more designs;
   repeating the simulating for the one or more designs as perturbed;
   determining (26) an error of the one or more designs as perturbed, the error being of the second values from the simulating to the first values; and
   selecting (27), based on the error, at least one of the one or more designs as perturbed or as generated; and
   storing (28) the selected at least one of the one or more designs as perturbed or as generated for production of the turbine.

2. The method of claim 1 wherein generating comprises generating with the first machine-learned network (54) comprising a generative adversarial network or a mixture density network.

3. The method of claim 1 wherein generating comprises generating in response to the input where the goal is one of the requirements or the constraint.

4. The method of claim 1 wherein generating comprises generating in response to the input where the goal is efficiency.

5. The method of claim 1 wherein simulating comprises simulating by the second machine-learned network (56) comprising a fully-connected residual network.

6. The method of claim 1 wherein simulating comprises simulating by the second machine-learned network (56) comprising a predictive model.

7. The method of claim 1 wherein perturbing comprises perturbing from a gradient based on the goal.

8. The method of claim 1 wherein repeating comprises repeating the perturbing and the simulating until gradients are below a first threshold or until a second threshold number of repetitions occurs.

9. The method of claim 1 further comprising selecting a subset of the one or more designs as perturbed based on the simulating.

10. A system for implementing the method of any one of claims 1 - 9 for machine-learning-based design of a turbine to be designed, the system comprising:
    a processor (50) configured by instructions stored in a memory (52), the instructions when executed by the processor (50) being to:

    inverse model design parameters from a specification for a design, the inverse modeling using a first neural network (54) having been trained by a first machine, the first neural network (54) comprising an inverse model;
    optimize the design parameters based on simulation of the design using the design parameters from the inverse modeling, the simulation using a second neural network (56) having been trained as a forward model by the first machine or a second machine; and
    output the design parameters for the design for production of the designed turbine.

11. The system of claim 10 wherein the inverse model (54) generates the design parameters for multiple first possible designs, the optimization generates additional second possible designs by perturbation of the design parameters of the multiple first possible designs, and the instructions further comprise an instruction to select one of the first and second possible designs as the design for the output of the design parameters.

12. The system of claim 10 wherein the design parameters comprise settings of variables of the design and wherein the specification comprises values of operational characteristics of the design.

**Patentansprüche**

1. Verfahren für generatives Design einer Turbine durch einen Künstliche-Intelligenz-Prozessor (50), wobei das Verfahren Folgendes umfasst:

   Erzeugen (22), durch den Künstliche-Intelligenz-Prozessor (50), eines oder mehrerer Designs einer zu entwerfenden Turbine, wobei das Erzeugen durch ein erstes maschinengelerntes Netzwerk (54) als Reaktion auf die Eingabe erster Werte von Designanforderungen, einer Einschränkung und eines Ziels zum Optimieren der Effizienz für die zu entwerfende Turbine erfolgt, wobei das erste maschinengelernte Netzwerk (54) ein inverses Modell umfasst;
   Simulieren (23), durch den Künstliche-Intelligenz-Prozessor (50), des Betriebs jedes des einen oder der mehreren Designs durch ein zweites maschinengelerntes Netzwerk (56), wobei das Simulieren zweite Werte für die Designanforderungen, die Einschränkung und/oder das Ziel bereitstellt;
   Stören (25) des einen oder der mehreren Designs;
   Wiederholen der Simulation für die eine oder die mehreren Designs als gestört;
   Bestimmen (26) eines Fehlers des einen oder der mehreren Designs als gestört, wobei der Fehler der zweiten Werte von dem Simulieren zu den ersten Werten ist; und
   Auswählen (27), basierend auf dem Fehler, mindestens eines des einen oder der mehreren Designs als gestört oder als erzeugt; und
   Speichern (28) des ausgewählten mindestens einen der ein oder mehreren Designs als gestört oder als für die Produktion der Turbine erzeugt.

2. Verfahren nach Anspruch 1, wobei das Erzeugen das Erzeugen mit dem ersten maschinengelernten Netzwerk (54) umfasst, das ein generatives Adversarialnetzwerk oder ein Mischungsdichtenetzwerk umfasst.

3. Verfahren nach Anspruch 1, wobei das Erzeugen das Erzeugen als Reaktion auf die Eingabe umfasst, wobei das Ziel eine der Anforderungen oder der Einschränkung ist.

4. Verfahren nach Anspruch 1, wobei das Erzeugen das Erzeugen als Reaktion auf die Eingabe umfasst, bei der das Ziel Effizienz ist.

5. Verfahren nach Anspruch 1, wobei das Simulieren das Simulieren durch das zweite maschinengelernte Netzwerk (56) umfasst, das ein vollständig verbundenes Restnetzwerk umfasst.

6. Verfahren nach Anspruch 1, wobei das Simulieren das Simulieren durch das zweite maschinengelernte Netzwerk (56) umfasst, das ein prädiktives Modell umfasst.

7. Verfahren nach Anspruch 1, wobei das Stören das Stören von einem Gradienten basierend auf dem Ziel umfasst.

8. Verfahren nach Anspruch 1, wobei das Wiederholen das Wiederholen des Störens und des Simulierens umfasst, bis Gradienten unter einem ersten Schwellenwert liegen oder bis eine zweite Schwellenanzahl von Wiederholungen auftritt.

9. Verfahren nach Anspruch 1, ferner umfassend das Auswählen einer Teilmenge des einen oder der mehreren Designs als gestört basierend auf dem Simulieren.

10. System zum Implementieren des Verfahrens nach einem der Ansprüche 1 - 9 für maschinenlernbasiertes Design einer zu konstruierenden Turbine, wobei das System Folgendes umfasst:
    einen Prozessor (50), der durch Anweisungen konfiguriert ist, die in einem Speicher (52) gespeichert sind, wobei die Anweisungen, wenn sie durch den Prozessor (50) ausgeführt werden, für Folgendes ausgelegt sind:

    inverse Modelldesignparameter aus einer Spezifikation für ein Design, wobei die inverse Modellierung unter Verwendung eines ersten neuronalen Netzwerks (54) durch eine erste Maschine trainiert wurde, wobei das erste neuronale Netzwerk (54) ein inverses Modell umfasst;
    Optimieren der Designparameter basierend auf einer Simulation des Designs unter Verwendung der Designparameter aus der inversen Modellierung, wobei die Simulation unter Verwendung eines zweiten neuronalen Netzwerks (56) durch die erste Maschine oder eine zweite Maschine als ein Vorwärtsmodell trainiert wurde; und
    Ausgeben der Designparameter für das Design zur Herstellung der entworfenen Turbine.

11. System nach Anspruch 10, wobei das inverse Modell (54) die Designparameter für mehrere erste mögliche Designs erzeugt, die Optimierung zusätzliche zweite mögliche Designs durch Störung der Entwurfsparameter der mehreren ersten möglichen Designs erzeugt und die Anweisungen ferner eine Anweisung zum Auswählen eines der ersten und zweiten möglichen Designs als das Design für die Ausgabe der Designparameter umfassen.

12. System nach Anspruch 10, wobei die Designparameter Einstellungen von Variablen des Designs umfassen und wobei die Spezifikation Werte von Betriebseigenschaften des Designs umfasst.

## Revendications

1. Procédé pour conception générative d'une turbine par un processeur d'intelligence artificielle (50), le procédé comprenant :

    la génération (22), par le processeur d'intelligence artificielle (50), d'une ou de plusieurs conceptions d'une turbine destinée à être conçue, la génération étant par un premier réseau à apprentissage machine (54) en réponse à l'entrée de premières valeurs d'exigences de conception, d'une contrainte, et d'un objectif pour optimiser le rendement pour la turbine destinée à être conçue, le premier réseau à apprentissage machine (54) comprenant un modèle inverse ;
    la simulation (23), par le processeur d'intelligence artificielle (50), d'une opération de chacune de l'une ou des plusieurs conceptions par un second réseau à apprentissage machine (56), la simulation fournissant des secondes valeurs pour les exigences de conception, la contrainte, et/ou l'objectif ;
    la perturbation (25) de l'une ou des plusieurs conceptions ;
    la répétition de la simulation pour l'une ou les plusieurs conceptions telles que perturbées ;
    la détermination (26) d'une erreur de l'une ou des plusieurs conceptions telles que perturbées, l'erreur étant des secondes valeurs provenant de la simulation par rapport aux premières valeurs ; et
    la sélection (27), sur la base de l'erreur, d'au moins une de l'une ou des plusieurs conceptions telles que perturbées ou telles que générées ; et
    le stockage (28) de l'au moins une sélectionnée de l'une ou des plusieurs conceptions telles que perturbées ou telles que générées pour production de la turbine.

2. Procédé de la revendication 1, dans lequel la génération comprend la génération avec le premier réseau à apprentissage machine (54) comprenant un réseau antagoniste génératif ou un réseau de densité de mélange.

3. Procédé de la revendication 1, dans lequel la génération comprend la génération en réponse à l'entrée où l'objectif est une des exigences ou de la contrainte.

4. Procédé de la revendication 1, dans lequel la génération comprend la génération en réponse à l'entrée où l'objectif est le rendement.

5. Procédé de la revendication 1, dans lequel la simulation comprend la simulation par le second réseau à apprentissage machine (56) comprenant un réseau résiduel entièrement connecté.

6. Procédé de la revendication 1, dans lequel la simulation comprend la simulation par le second réseau à apprentissage machine (56) comprenant un modèle prédictif.

7. Procédé de la revendication 1, dans lequel la perturbation comprend la perturbation provenant d'un gradient basé sur l'objectif.

8. Procédé de la revendication 1, dans lequel la répétition comprend la répétition de la perturbation et de la simulation jusqu'à ce que des gradients soient inférieurs à un premier seuil ou jusqu'à ce qu'un second nombre seuil de répétitions se produise.

9. Procédé de la revendication 1, comprenant en outre la sélection d'un sous-ensemble de l'une ou des plusieurs conceptions telles que perturbées sur la base de la simulation.

10. Système pour mettre en œuvre le procédé de l'une quelconque des revendications 1 à 9 pour la conception, basée sur apprentissage machine, d'une turbine destinée à être conçue, le système comprenant : un processeur (50) configuré par des instructions stockées dans une mémoire (52), les instructions, lorsqu'elles sont exécutées par le processeur (50) étant pour :

    modéliser de façon inverse des paramètres de conception provenant d'une spécification pour une conception, la modélisation inverse utilisant un premier réseau neuronal (54) ayant été entraîné par une première machine, le premier réseau neuronal (54) comprenant un modèle inverse ;
    optimiser les paramètres de conception sur la base de simulation de la conception en utilisant les paramètres de conception provenant de la modélisation inverse, la simulation utilisant un second réseau neuronal (56) ayant été entraîné en tant que modèle prédictif par la première machine ou une seconde machine ; et
    sortir les paramètres de conception pour la conception pour production de la turbine conçue.

11. Système de la revendication 10, dans lequel le modèle inverse (54) génère les paramètres de conception pour de multiples premières conceptions possibles, l'optimisation génère des secondes conceptions possibles supplémentaires par perturbation des paramètres de conception des multiples premières conceptions possibles, et les instructions comprennent en outre une instruction de sélectionner une des premières et secondes conceptions possibles en tant que conception pour la sortie des paramètres de conception.

**12.** Système de la revendication 10, dans lequel les paramètres de conception comprennent des réglages de variables de la conception et dans lequel la spécification comprend des valeurs de caractéristiques opérationnelles de la conception.

10 — Obtain Design and Simulation Data

12 — Machine Train Generative Model and Prediction Model

14 — Store Trained Network

16 — Program for Optimization

FIG. 1

20 — Input Requirements-Constraints

Identify Goals — 21

22 — Generate Design with Generative/Inverse Model

23 — Simulate Performance with Forward Model

24 — Optimize Design

25 — Perturb Design

26 — Determine Error

27 — Select Design

28 — Store/Manufacture Design

FIG. 2

50 — Design Processor

52 — Memory

54 — Inverse Machine-Learned Network

56 — Forward Machine-Learned Network

FIG. 5

**Design Parameter**

| GT Shaft Efficiency (ETAK)<br>Polytropic Compressor Efficiency (etavp)<br>Istentropic ISO Turbine Efficiency (etati)<br>ISO Turbine Inlet Temperature (tt1)<br>Compressor Pressure Ratio (piv)<br>SAS Equivalent Mass Flow (MENEXT)<br>Primary Zone Temperature (tpz)<br>GT Exhaust Flow (mt2)<br>Turbine Cooling Fraction Of Intake Flow (MKTURB)<br>Compressor Intake Flow (MV1)<br>Turbine Inlet Temperature (TT0)<br>Compressor Exit Pressure (pv2)<br>Enthalpy At Compressor Exit (hv2)<br>CC Power (CCPP_power_NET_15/600)<br>Ccoled Cooling Air Flow (MKUEHL)<br>Compressor Exit Temperature (TV2)<br>Fuel Flow (MBR)<br>$CO_2$ Exhaust Gas Composition (gCO2)<br>$H_2O$ Exhaust Gas Composition (gH2O)<br>$N_2$ Exhaust Gas Composition (gN2)<br>Ar Exhaust Gas Composition (gAr)<br>$O_2$ Exhaust Gas Composition (gO2) |

**Requirements**

Ambient Temperature (TEB)
GT Shaft Power (PK)
GT Exhaust Temperature (tt2)
Fuel Lower Heating Value (HU)
RAC (External Cooler) Power (qkl)
GT Exhaust (Total) Pressure (pT2)
Combustor Cooling Fraction of Intake Flow (mkbk)
CC Efficiency (CCPP_efficiency_NET_15/600
Absence/Presence Of RAC (RAC_flag)
Absence/Presence Of SiCAT (SiCAT_flag)
Ambient Air Cooling Frac Of Intake Flow (b4_cooling)
Delta Vs Arbitrary (aeroPerf)

**Generative Model**
<u>30</u>

12 Output Variables

22 Input Variables

FIG. 3

EP 3 928 175 B1

## Design Parameter

Ambient Temperature (TEB)
Polytropic Compressor Efficiency (etavp)
Istentropic ISO Turbine Efficiency (etati)
ISO Turbine Inlet Temperature (tt1)
Compressor Pressure Ratio (piv)
SAS Equivalent Mass Flow (MENEXT)
Primary Zone Temperature (tpz)
GT Exhaust Flow (mt2)
Fuel Lower Heating Value (HU)
Combustor Cooling Fraction of Intake Flow (mkbk)
Turbine Cooling Fraction Of Intake Flow (MKTURB)
Ccoled Cooling Air Flow (MKUEHL)
Absence/Presence Of RAC (RAC_flag)
Absence/Presence Of SiCAT (SiCAT_flag)
Ambient Air Cooling Frac Of Intake Flow (b4_cooling)
Delta Vs Arbitrary (aeroPerf)

16 Input Variables

## Residual Neural Network

<u>40</u>

$\mathcal{F}(x)$

x

weight layer

↓ relu

weight layer

x
identity

$\mathcal{F}(x) + x$   ⊕

↓ relu

## KPI's

GT Shaft Power (PK)
GT Shaft Efficiency (ETAK)
GT Exhaust Temperature (tt2)
Compressor Exit Temperature (TV2)
Fuel Flow (MBR)
RAC (External Cooler) Power (qkl)
GT Exhaust (Total) Pressure (pT2)
$CO_2$ Exhaust Gas Composition (gCO2)
$H_2O$ Exhaust Gas Composition (gH2O)
$N_2$ Exhaust Gas Composition (gN2)
Ar Exhaust Gas Composition (gAr)
$O_2$ Exhaust Gas Composition (gO2)
$SO_2$ Exhaust Gas Composition (gSO2)
Compressor Intake Flow (MV1)
Turbine Inlet Temperature (TT0)
Compressor Exit Pressure (pv2)
Enthalpy At Compressor Exit (hv2)
CC Power (CCPP_power_NET_15/600)
CC Efficiency (CCPP_efficiency_NET_15/600

19 Output Variables

## FIG. 4

EP 3 928 175 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CEM C. TUTUM et al.** *Functional Generative Design: An Evolutionary Approach to 3D-Printing*, 19 April 2018